# EUROPEAN PATENT APPLICATION

(11) **EP 4 844 857 A1**
(43) Date of publication of application: **25.11.2026**
(21) Application number: 25880414.5
(22) Date of filing: 17.10.2025
(51) Int. Cl.: H01M 10/056, H01M 10/42, H01M 50/451, H01M 50/431, H01M 50/417, H01M 50/491, H01M 50/497, H01M 10/052

(54) **METHOD FOR PREPARING COMPOSITE ELECTROLYTE**

(30) Priority: 18.10.2024 KR 20240142821
(71) Applicant: LG Chem, Ltd., Seoul 07336 (KR)
(72) Inventor: KIM, Rayoung, Seoul 07796 (KR); YOU, Tae Sun, Seoul 07796 (KR); LEE, Kyoungsoo, Seoul 07796 (KR)
(74) Representative: Hoffmann Eitle
(86) International application number: PCT/KR2025/016520
(87) International publication number: WO 2026/084532

(57) **Abstract**

The present disclosure relates to a manufacturing method of a composite electrolyte, the manufacturing method including: preparing a slurry including inorganic particles, a polymer component, a crosslinking agent, an initiator, and an electrolyte solution; obtaining a coating structure by applying the slurry to one surface or both surfaces of a substrate layer; and obtaining a composite electrolyte by irradiating the coating structure with ultraviolet rays, wherein a content of the crosslinking agent in the slurry, a content of the initiator in the slurry, and a light dose of the ultraviolet rays are controlled.

## Description

### [TECHNICAL FIELD]

The present disclosure relates to a manufacturing method of composite electrolyte.

### [BACKGROUND ART]

A composite electrolyte has been considered as a technology for suppressing a risk of battery ignition caused by use of a liquid electrolyte. The composite electrolyte may mean an electrolyte in which inorganic particles are composited with a gel electrolyte. Mechanical strength of the composite electrolyte may be higher than mechanical strength of the liquid electrolyte. However, as the gel electrolyte repeatedly swells and contracts due to expansion and contraction of an electrode during cycling, the mechanical strength of the composite electrolyte may deteriorate. Deterioration of the mechanical strength of the composite electrolyte may lead to deterioration of battery characteristics.

### [DETAILED DESCRIPTION OF INVENTION]

### [TECHNICAL PROBLEMS]

The present disclosure is intended to provide a manufacturing method of a composite electrolyte having improved mechanical strength.

In addition, the present disclosure is intended to provide a manufacturing method of a composite electrolyte capable of uniformly curing a slurry.

### [TECHNICAL SOLUTION]

A manufacturing method of a composite electrolyte of the present disclosure includes: preparing a slurry including inorganic particles, a polymer component, a crosslinking agent, an initiator, and an electrolyte solution; obtaining a coating structure by applying the slurry to one surface or both surfaces of a substrate layer; and obtaining a composite electrolyte by irradiating the coating structure with ultraviolet rays at a light dose of 800 mJ/cm² or more, wherein a content of the crosslinking agent in the slurry is within a range of 10 wt% to 25 wt%. In addition, a content of the initiator in the slurry is within a range of 1 part by weight to 10 parts by weight based on 100 parts by weight of the crosslinking agent, the electrolyte solution includes a non-aqueous solvent and a lithium salt, and a content of linear carbonate in the non-aqueous solvent is higher than a content of ethylene carbonate.

A total content of the inorganic particles and the polymer component in the slurry may be within a range of 250 parts by weight to 350 parts by weight based on 100 parts by weight of the crosslinking agent.

The crosslinking agent may include a monomeric crosslinking agent and a polymeric crosslinking agent.

The crosslinking agent may include one or more selected from the group consisting of triethylene glycol diacrylate (TEGDA), triethylene glycol dimethacrylate (TEGDMA), polyethylene glycol diacrylate (PEGDA), polyethylene glycol dimethacrylate (PEGDMA), polyurethane diacrylate (PUDA), polyurethane dimethacrylate (PUDMA), trimethylolpropane triacrylate (TMPTA), trimethylolpropane trimethacrylate (TMPTMA), 1,6-hexanediol diacrylate (HDDA), and 1,6-hexanediol dimethacrylate (HDDMA).

The initiator may include one or more selected from the group consisting of a short-wavelength photopolymerization initiator and a long-wavelength photopolymerization initiator.

The initiator may include one or more selected from the group consisting of IRGACURE 127 (2-Hydroxy-1-{4-[4-(2-hydroxy-2-methyl-propionyl)-benzyl]-phenyl}-2-methyl-propan-1-one), DMPA (2,2-dimethoxy-2-phenylacetonephenone), HOMPP (2-hydroxy-2-methylpropipphenone), and LAP (Lithium phenyl-2,4,6-trimethylbenzoylphosphinate), or one or more selected from the group consisting of Bis(2,4,6-trimethylbenzoyl)-phenylphosphineoxide and Ethyl (2, 4, 6-trimethylbenzoyl) pheny1phosphinate.

A thickness of the substrate layer may be within a range of 5 µm to 20 µm.

In obtaining the coating structure, the slurry may be applied onto the substrate layer to a thickness of 30 µm to 45 µm.

The substrate layer may be a porous substrate layer including a polyolefin-based polymer.

A content of the inorganic particles in the slurry may be equal to or greater than a content of the polymer component.

The inorganic particles may include one or more selected from the group consisting of a lithium-containing metal oxide and a lithium-free metal oxide.

The lithium-containing metal oxide may include one or more selected from the group consisting of a lithium aluminum germanium phosphate (LAGP)-based compound, a lithium lanthanum zirconium oxide (LLZO)-based compound, a lithium aluminum titanium phosphate (LATP)-based compound, a lithium lanthanum zirconium tantalum oxide (LLZTO)-based compound, a lithium silicon titanium phosphate (LSTP)-based compound, and a lithium oxide.

The lithium-free metal oxide may include one or more selected from the group consisting of zinc oxide (ZnO), calcium carbonate (CaCO₃), silicon dioxide (SiO₂), boehmite (AlO(OH)), alumina (Al₂O₃), barium titanate (BaTiO₃), and titanium dioxide (TiO₂).

The polymer component may include one or more selected from the group consisting of polyvinylidene fluoride, poly(vinylidene fluoride-co-trichloroethylene), poly(vinylidene fluoride-co-chlorotrifluoroethylene), poly(vinylidene fluoride-co-trifluoroethylene), poly(vinylidene fluoride-co-tetrafluoroethylene), poly(vinylidene fluoride-co-hexafluoropropylene), spandex, butyl acrylate, polymethyl methacrylate, polyacrylonitrile, polyvinylpyrrolidone, and polyvinyl acetate.

The electrolyte solution may further include an electrolyte solution additive.

The non-aqueous solvent may include one or more selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), and gamma-butyrolactone (γ-butyrolactone).

The lithium salt may include one or more selected from the group consisting of LiTFSi, LiFSi, LiPF₆, LiBF₄, LiCl, LiBr, LiI, LiClO₄, LiAsF₆, LiCH₃CO₂, LiCF₃SO₃, LiN(CF₃SO₂)₂, LiN(FSO₂)₂, and LiC(CF₂SO₂)₃.

### [EFFECT OF INVENTION]

The present disclosure may provide a manufacturing method of a composite electrolyte having improved mechanical strength.

In addition, the present disclosure may provide a manufacturing method of a composite electrolyte capable of uniformly curing a slurry.

### [BEST MODE FOR CARRYING OUT THE INVENTION]

Hereinafter, the present disclosure will be described in detail.

As used herein, the expression "within a range of" includes the respective upper and lower limit values. For example, when it is described as being within a range of 1 to 9, 1 and 9 are respectively included.

The manufacturing method of a composite electrolyte of the present disclosure may include preparing a slurry. The slurry may include inorganic particles, a polymer component, a crosslinking agent, an initiator, and an electrolyte solution.

The manufacturing method of a composite electrolyte of the present disclosure may include obtaining a coating structure. In obtaining the coating structure, the slurry may be applied to one surface or both surfaces of a substrate layer.

The manufacturing method of a composite electrolyte of the present disclosure may include obtaining a composite electrolyte by irradiating the coating structure with ultraviolet rays at a light dose of 800 mJ/cm² or more.

In the manufacturing method of a composite electrolyte of the present disclosure, a content of the crosslinking agent in the slurry is within a range of 10 wt% to 25 wt%, and a content of the initiator in the slurry is within a range of 1 part by weight to 10 parts by weight based on 100 parts by weight of the crosslinking agent.

In the manufacturing method of a composite electrolyte of the present disclosure, obtaining the coating structure may be performed after preparing the slurry. In the manufacturing method of a composite electrolyte of the present disclosure, obtaining the composite electrolyte may be performed after obtaining the coating structure.

In the present disclosure, the composite electrolyte may include a polymer component impregnated with an electrolyte solution and inorganic particles composited therewith. In this respect, the composite electrolyte of the present disclosure differs from a conventional electrolyte and separator structure which is included in a battery case accommodating a positive electrode, a negative electrode, and a separator disposed between the positive electrode and the negative electrode, and an electrolyte solution injected therein.

The composite electrolyte of the present disclosure may include a substrate layer and an active layer disposed on one surface or both surfaces of the substrate layer. The active layer may be formed from the slurry. Alternatively, the active layer may be manufactured from the slurry. For example, the slurry may be applied to one surface or both surfaces of the substrate layer and then cured to form the active layer.

The substrate layer may be porous. A fluid may move from one surface of the substrate layer to another surface through pores of the substrate layer. Charge carriers, for example, lithium ions, may efficiently move through the pores.

The substrate layer may include a porous polyolefin-based film.

Here, the polyolefin-based porous film refers to a porous film including a polyolefin-based resin as a main component.

The polyolefin-based porous film may include the polyolefin-based resin in an amount of 50 vol% or more, 90 vol% or more, or 95 vol% or more, based on the entirety of materials constituting the polyolefin-based porous film.

A weight average molecular weight of components included in the polyolefin-based resin may be 3×10⁵ to 15×10⁶. When the weight average molecular weight of the components included in the polyolefin-based resin is 1,000,000 or more, strength of a separator including the polyolefin porous film may be improved.

The polyolefin-based resin may include a thermoplastic resin. The thermoplastic resin may include a homopolymer, for example, polyethylene, polypropylene, or polybutene, or a copolymer, for example, an ethylene-propylene copolymer, obtained by polymerizing monomers such as ethylene, propylene, 1-butene, 4-methyl-1-pentene, and 1-hexene.

The polyolefin-based porous film may be a layer including these polyolefin-based resins alone, or a layer including two or more of these polyolefin-based resins. Among these, polyethylene and high-molecular-weight polyethylene having ethylene as a main skeleton may interrupt an excessive current flow at a lower temperature, that is, may shut down at a lower temperature. In addition, the polyolefin-based porous film may further include a component other than the polyolefin-based resin, which does not impair the function of the film.

The slurry may include a polymer component and an electrolyte solution impregnated in the polymer component. As a result of impregnation with the electrolyte solution, the polymer component may swell. The swollen polymer component may have a gel phase.

The polymer component may form a skeleton of the slurry and may absorb the electrolyte solution. In addition, the polymer component may have appropriate crystallinity and polarity, such that the composite electrolyte or a battery to which the composite electrolyte is applied exhibits appropriate ionic conductivity. In particular, the polymer component may have a portion exhibiting polarity, and this portion may be bonded to a crosslinking agent described below. At this time, the polymer component may form a crosslinked structure in the slurry.

The polymer component may include one or more selected from the group consisting of polyvinylidene fluoride, poly(vinylidene fluoride-co-trichloroethylene), poly(vinylidene fluoride-co-chlorotrifluoroethylene), poly(vinylidene fluoride-co-trifluoroethylene), poly(vinylidene fluoride-co-tetrafluoroethylene), poly(vinylidene fluoride-co-hexafluoropropylene), spandex, butyl acrylate, polymethyl methacrylate, polyacrylonitrile, polyvinylpyrrolidone, and polyvinyl acetate.

The electrolyte solution may be impregnated in the polymer. The electrolyte solution may include a non-aqueous solvent, a lithium salt, and an electrolyte solution additive. The lithium salt may be dissolved in the non-aqueous solvent. The electrolyte solution additive may be included in a predetermined amount so that charging and discharging of a battery to which the composite electrolyte is applied may be performed more stably.

The non-aqueous solvent may refer to an organic solvent that does not include water or includes only a trace amount of water even when water is included.

The non-aqueous solvent may include one or more selected from the group consisting of a cyclic carbonate solvent and a linear carbonate solvent. The non-aqueous solvent may include both a cyclic carbonate solvent and a linear carbonate solvent. The non-aqueous solvent may include one or more selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), and gamma-butyrolactone (γ-butyrolactone).

The non-aqueous solvent may include ethylene carbonate (EC) or propylene carbonate (PC) as a cyclic carbonate, and may also include a linear carbonate. The linear carbonate may mean a compound having a linear structure including monovalent alkyl groups on both sides of a carbonate group, respectively. The alkyl group may be selected from the group consisting of a methyl group, an ethyl group, and a propyl group, but is not limited thereto. Examples of the linear carbonate include dimethyl carbonate (DMC), ethyl methyl carbonate (EMC), and diethyl carbonate (DEC).

The non-aqueous solvent may include ethylene carbonate as a cyclic carbonate, and may also include one or more selected from the group consisting of dimethyl carbonate, ethyl methyl carbonate, and diethyl carbonate as a linear carbonate. For example, the non-aqueous solvent may include ethylene carbonate and ethyl methyl carbonate, may include ethylene carbonate and diethyl carbonate, or may include ethylene carbonate and dimethyl carbonate.

A content of the linear carbonate in the non-aqueous solvent may be higher than a content of the cyclic carbonate. When different types of solvents are included as the linear carbonate of the non-aqueous solvent, a total content of the linear carbonate included in the solvent may be higher than the content of the cyclic carbonate.

When the non-aqueous solvent includes ethylene carbonate as a cyclic carbonate and also includes a linear carbonate, a content of the linear carbonate may be higher than a content of ethylene carbonate.

For example, when the non-aqueous solvent includes ethylene carbonate and ethyl methyl carbonate, a volume ratio of ethyl methyl carbonate may be higher than a volume ratio of ethylene carbonate. When the non-aqueous solvent includes ethylene carbonate and dimethyl carbonate, a volume ratio of dimethyl carbonate may be higher than a volume ratio of ethylene carbonate. When the non-aqueous solvent includes ethylene carbonate and diethyl carbonate, a volume ratio of diethyl carbonate may be higher than a volume ratio of ethylene carbonate.

A content of the cyclic carbonate in the non-aqueous solvent may be 0.5 to 49.5 based on 100 of a total content of the non-aqueous solvent.

Preferably, the content may be 1.0 or more, 2.0 or more, 3.0 or more, 4.0 or more, 5.0 or more, 6.0 or more, 7.0 or more, 8.0 or more, 9.0 or more, 10.0 or more, 11.0 or more, 12.0 or more, 13.0 or more, 14.0 or more, 15.0 or more, 16.0 or more, 17.0 or more, 18.0 or more, 19.0 or more, or 20.0 or more, and may be 49.0 or less, 48.0 or less, 47.0 or less, 46.0 or less, 45.0 or less, 44.0 or less, 43.0 or less, 42.0 or less, 41.0 or less, or 40.0 or less.

More preferably, the content may be 21.0 or more, 22.0 or more, 23.0 or more, 24.0 or more, 25.0 or more, 26.0 or more, 27.0 or more, 28.0 or more, or 29.0 or more, and may be 39.0 or less, 38.0 or less, 37.0 or less, 36.0 or less, 35.0 or less, 34.0 or less, 33.0 or less, 32.0 or less, or 31.0 or less.

A content of the linear carbonate in the non-aqueous solvent may be 50.5 to 99.5 based on 100 of the total content of the non-aqueous solvent.

Preferably, the content may be 51.0 or more, 52.0 or more, 53.0 or more, 54.0 or more, 55.0 or more, 56.0 or more, 57.0 or more, 58.0 or more, 59.0 or more, or 60.0 or more, and may be 99.0 or less, 98.0 or less, 97.0 or less, 96.0 or less, 95.0 or less, 94.0 or less, 93.0 or less, 92.0 or less, 91.0 or less, 90.0 or less, 89.0 or less, 88.0 or less, 87.0 or less, 86.0 or less, 85.0 or less, 84.0 or less, 83.0 or less, 82.0 or less, or 81.0 or less.

More preferably, the content may be 61.0 or more, 62.0 or more, 63.0 or more, 64.0 or more, 65.0 or more, 66.0 or more, 67.0 or more, 68.0 or more, or 69.0 or more, and may be 80.0 or less, 79.0 or less, 78.0 or less, 77.0 or less, 76.0 or less, 75.0 or less, 74.0 or less, 73.0 or less, 72.0 or less, or 71.0 or less.

As the respective contents of the cyclic carbonate and the linear carbonate in the non-aqueous solvent are controlled as described above, solubility of a polymer binder may be increased, and an increase in viscosity of a coating slurry may be prevented.

Among solvents included in the non-aqueous solvent, a content of a solvent existing in a solid phase at room temperature may be less than a content of a solvent existing in a liquid phase at room temperature. The room temperature refers to 20°C to 30°C, and may be, for example, 25°C.

The lithium salt may refer to a material that decomposes into a lithium cation and an anion upon dissociation. The lithium salt may include one or more selected from the group consisting of LiTFSi, LiFSi, LiPF₆, LiBF₄, LiCl, LiBr, LiI, LiClO₄, LiAsF₆, LiCH₃CO₂, LiCF₃SO₃, LiN(CF₃SO₂)₂, LiN(FSO₂)₂, and LiC(CF₂SO₂)₃.

The electrolyte solution additive may include one or more selected from the group consisting of vinylene carbonate (VC), fluoroethylene carbonate (FEC), 1,3-propane sultone (PS), 1,3-propene sultone (PRS), ethylene sulfate (Ethylene Sulfate; Esa), and trimethylene sulfate (Trimethylene sulfate; TMS).

The electrolyte solution may include the electrolyte solution additive, for example, within a range of 1 wt% to 5 wt%.

The slurry may further include inorganic particles. The inorganic particles may be involved in transport of lithium ions, thereby improving performance of a battery to which the composite electrolyte is applied. The inorganic particles may also impart heat resistance, heat shielding properties, heat absorption properties, and the like to the composite electrolyte, thereby protecting the composite electrolyte from external mechanical stimulation and/or thermal stimulation.

The content of the inorganic particles in the slurry may be equal to or greater than a content of the polymer component. Preferably, the content of the inorganic particles may be higher than the content of the polymer component. Among the inorganic particles, the polymer component, and the electrolyte solution constituting the slurry, the inorganic particles may be included in the slurry in a greater amount than the other of the two components excluding the electrolyte solution.

That the inorganic particles are included in the slurry in a greater amount than the polymer component may mean that a weight of the inorganic particles is higher than a weight of the polymer component based on the slurry.

The inorganic particles may include one or more selected from the group consisting of a lithium-containing metal oxide and a lithium-free metal oxide.

The lithium-containing metal oxide may include one or more selected from the group consisting of a lithium aluminum germanium phosphate-based compound (LAGP; Li₁₊ₓAlₓGe₂₋ₓ(PO₄)₃, 0≤x≤2)), a lithium lanthanum zirconium oxide-based compound (LLZO; Li₇₋ₓLa₃Zr₂₋ₓMₓO_{12,} where M is a doping element selected from the group consisting of at least one of Al, Ga, Fe, Ta, Nb, W, Mo, Hf, Ti, and combinations thereof, and 0≤x≤2), a lithium aluminum titanium phosphate-based compound (LATP; Li₁₊ₓAlₓTi₂₋ₓ(PO₄)₃, 0≤x≤2), a lithium silicon titanium phosphate-based compound (LSTP; Li₁₊ₓSiₓTi₂₋ₓ(PO₄)_{3,} 0≤x≤2), and a lithium oxide.

For example, the lithium-containing metal oxide may be LLZTO(Li_{6.75}La₃Zr_{1.75}Ta_{0.25}O₁₂), LLZO(Li₇La₃Zr₂O₁₂), LLTO(Li₅La₃Ta₂O₁₂), LLT(Li_{0.33}La_{0.55}TiO₃), Li₃PO₄, Li₄SiO₄, Li₃BO₃, LAGP(Li_{1.5}Al_{0.5}Ge_{1.5}P₃O₁₂), LATP(Li_{1.3}Al_{0.3}Ti_{1.7}P₃O₁₂), LLZ-Ta(Li₇La₃Zr₂₋ₓTaₓO_{12,} 0≤x≤2), LLZ-Nb(Li₇La₃Zr₂₋ₓNbₓO_{12,} 0≤x≤2) or Li₄SiO₄-Li₃PO₄.

The lithium-free metal oxide may include one or more selected from the group consisting of zinc oxide (ZnO), calcium carbonate (CaCO₃), silicon dioxide (SiO₂), boehmite (AlO(OH)), alumina (Al₂O₃), barium titanate (BaTiO₃), and titanium dioxide (TiO₂).

The slurry may include the lithium-free metal oxide as the inorganic particles. The slurry may include the boehmite (AlO(OH)) and the barium titanate (BaTiO₃) as the inorganic particles.

The barium titanate (BaTiO₃) may be added to the slurry to reduce a moisture content of a film formed by the slurry. A content of the boehmite (AlO(OH)) in the slurry may be higher than a content of the barium titanate (BaTiO₃). As a result, an amount of moisture generated from the slurry may be reduced.

In the present disclosure, the thickness of the substrate layer may be within a range of 5 µm to 20 µm. The thickness of the substrate layer to which the slurry is applied may be within a range of 5 µm to 20 µm.

In obtaining the coating structure, the slurry may be applied to the substrate layer to a thickness of 30 µm to 45 µm.

In obtaining the composite electrolyte, after irradiation with the ultraviolet rays, a sum of the thickness of the substrate layer and the thickness of the slurry may be 50 µm.

The slurry may further include a crosslinking agent. The crosslinking agent may form a crosslinked structure with the polymer component in the slurry.

The crosslinked structure may be formed by bonding between a polar functional group of the polymer component and a specific functional group of the crosslinking agent. The crosslinking agent may have a photoreactive functional group. The crosslinked structure of the polymer component may be formed by bonding between the polar functional group and the photoreactive functional group. The crosslinked structure of the polymer component may be formed by applying external force to a mixture including the polymer component and the crosslinking agent. Specifically, the crosslinked structure may be formed by applying heat or light to the mixture including the polymer component and the crosslinking agent. More specifically, the crosslinked structure may be formed by applying light to the mixture including the polymer component and the crosslinking agent.

The crosslinked structure may be formed by bonding at least two polymers through a crosslinking agent. Since the crosslinking agent acts as a medium, the crosslinking agent may include two or more functional groups involved in the crosslinked structure. The crosslinking agent may include two or more photoreactive functional groups.

The crosslinking agent may include a (meth)acrylate group as the photoreactive functional group.

The (meth)acrylate group may mean an acrylate group or a methacrylate group. The (meth)acrylate group may mean a monovalent functional group derived from an ester of (meth)acrylic acid.

The crosslinking agent may include one or more selected from the group consisting of triethylene glycol diacrylate (TEGDA), triethylene glycol dimethacrylate (TEGDMA), polyethylene glycol diacrylate (PEGDA), polyethylene glycol dimethacrylate (PEGDMA), polyurethane diacrylate (PUDA), polyurethane dimethacrylate (PUDMA), trimethylolpropane triacrylate (TMPTA), trimethylolpropane trimethacrylate (TMPTMA), 1,6-hexanediol diacrylate (HDDA), and 1,6-hexanediol dimethacrylate (HDDMA). In that a crosslinked structure may be formed by light irradiation, the crosslinking agent may be a mixture including TMPTA or TMPAD and PUDA. The crosslinking agent may include one or more selected from the group consisting of a monomeric crosslinking agent and a polymeric crosslinking agent.

The PUDA may be used to secure flexibility of the active layer. Meanwhile, when the crosslinking agent is a mixture including the TMPTA and PUDA, a TMPA content of the mixture may be higher than a PUDA content of the mixture. That is, the mixture may include the PUDA as an additive. Since reactivity of the PUDA is lower than reactivity of the TMPTA, the PUDA is preferably used in a relatively small amount. The slurry may further include an initiator. The initiator may be used when the crosslinked structure of the polymer is formed. Accordingly, the slurry may further include an initiator-derived component. The slurry may further include a photopolymerization initiator-derived component.

The photopolymerization initiator may include one or more selected from the group consisting of a short-wavelength photopolymerization initiator and a long-wavelength photopolymerization initiator.

The short-wavelength photopolymerization initiator may include one or more selected from the group consisting of IRGACURE 127 (2-Hydroxy-1-{4-[4-(2-hydroxy-2-methylpropionyl)-benzyl]-phenyl}-2-methyl-propan-1-one), DMPA (2,2-dimethoxy-2-phenylacetonephenone), HOMPP (2-hydroxy-2-methylpropipphenone), and LAP (Lithium phenyl-2,4,6-trimethylbenzoylphosphinate).

The long-wavelength photopolymerization initiator may include one or more selected from the group consisting of Bis(2,4,6-trimethylbenzoyl)-phenylphosphineoxide and Ethyl (2, 4, 6-trimethylbenzoyl) pheny1phosphinate.

In the manufacturing method of a composite electrolyte of the present disclosure, the content of the crosslinking agent, the content of the initiator, and the content of the slurry may have a predetermined relationship.

The content of the crosslinking agent in the slurry may be within a range of 10 wt% to 25 wt%, and the content of the initiator in the slurry may be within a range of 1 part by weight to 10 parts by weight based on 100 parts by weight of the crosslinking agent. When the content of the crosslinking agent and the content of the initiator in the slurry are within the above ranges, crosslinking may be smoothly performed by the crosslinking agent and the initiator. As a result, the slurry may have excellent elasticity.

In addition, at this time, the polymer component and the inorganic particles may be uniformly dispersed inside the slurry. In addition, at this time, a movement path of charge carriers, for example, lithium ions, may be uniformly formed, thereby improving performance of a battery including the composite electrolyte.

When the content of the crosslinking agent is less than 10 wt%, the content of the crosslinking agent relative to the electrolyte solution is low, and thus the inorganic particles, the polymer component, and the crosslinking agent may not be uniformly dispersed. As a result, crosslinking may not proceed sufficiently, and elasticity of the slurry may decrease. In addition, at this time, the movement path of the charge carriers may be non-uniformly formed. Furthermore, a low-boiling-point solvent may volatilize during the crosslinking process, thereby increasing non-uniformity of a film. As a result, performance of a battery including the composite electrolyte may deteriorate.

When the content of the crosslinking agent is 25 wt% or more, resistance of a composite electrolyte membrane may increase, and ionic conductivity of the composite electrolyte membrane may decrease. As a result, life characteristics of a battery including the composite electrolyte may deteriorate, and performance may deteriorate.

When the content of the initiator exceeds 10 parts by weight based on 100 parts by weight of the crosslinking agent, many crosslinking sites may be formed, and a length of a crosslinked chain may be shortened. Due to this, excellent elasticity may not be obtained. In addition, an unreacted initiator may cause a side reaction.

When the content of the initiator is less than 1 part by weight based on 100 parts by weight of the crosslinking agent, a crosslinking rate may decrease, and a long time may be required for the crosslinking process. In addition, some of the crosslinking agents may fail to form crosslinking sites.

Ultimately, in the present disclosure, a composite electrolyte having optimal performance may be manufactured by comparing and controlling the contents of the slurry and the initiator and comparing and controlling the contents of the initiator and the crosslinking agent.

In the manufacturing method of a composite electrolyte of the present disclosure, contents of the inorganic particles, the polymer component, and the crosslinking agent may have a predetermined relationship.

A total content of the inorganic particles and the polymer component may be within a range of 250 parts by weight to 350 parts by weight based on 100 parts by weight of the crosslinking agent. When the total content of the inorganic particles and the polymer component in the slurry is within the above weight range, lithium ions may be smoothly transported. In addition, the composite electrolyte may have heat resistance, heat shielding properties, heat absorption properties, and the like, and may be protected from external stimulation.

The present disclosure includes obtaining a composite electrolyte by irradiating the coating structure with ultraviolet rays at a light dose of 800 mJ/cm² or more. In the present disclosure, a composite electrolyte may be obtained by irradiating the coating structure with ultraviolet rays at a light dose of 850 mJ/cm² or more, 900 mJ/cm² or more, 950 mJ/cm² or more, or 1000 mJ/cm² or more.

When the light dose of the ultraviolet rays is lower than 800 mJ/cm², the electrolyte solution may not be cured. In addition, crosslinking by the crosslinking agent and the initiator may not proceed. As a result, performance and life characteristics of a battery including the composite electrolyte may deteriorate.

In the present disclosure, a composite electrolyte may be obtained by irradiating the coating structure with ultraviolet rays at a light dose of 2000 mJ/cm² or less, 1900 mJ/cm² or less, 1800 mJ/cm² or less, 1700 mJ/cm² or less, 1600 mJ/cm² or less, or 1500 mJ/cm² or less. As the ultraviolet rays, Ultraviolet A (UVA), Ultraviolet B (UVB), and Ultraviolet C (UVC) may be used.

Hereinafter, the present disclosure will be described in more detail with reference to Examples and Comparative Examples. However, the present disclosure is not limited to the Examples.

### [Preparation Examples]

### Example 1. Composite electrolyte

(1) A dispersion is prepared by dispersing 10 g of a mixture as inorganic particles (first inorganic particles:second inorganic particles = 9:1 weight ratio) in 74.7 g of an electrolyte solution. Here, the first inorganic particles are boehmite ((D50): 0.4 µm, BET: about 12 m²/g). The second inorganic particles are barium titanate (D50: 0.65 µm, BET: about 3.75 m²/g).
(2) As the electrolyte solution, a solution in which a non-aqueous organic solvent obtained by mixing ethylene carbonate (EC) and ethyl methyl carbonate (EMC) at a volume ratio of 3:7, 1M LiTFSI, and 2 wt% vinylene carbonate (VC) are dissolved is used.
(3) 5 g of PVDF-HFP (Kynar 2501, Arkema) as a polymer, 8 g of TMPTA as a crosslinking agent, and 2 g of PUDA (Miramer PU2100, Miwon Specialty Chemical Co., Ltd.) are added to the dispersion. Subsequently, the dispersion is stirred with a homogenizer, and then 0.3 g of HMPP as a photopolymerization initiator is added thereto, thereby obtaining a slurry having a solid content of 15%.
(4) The slurry is applied onto upper and lower surfaces of a polyethylene-based film having a thickness of 5 µm using a dual slot die, thereby obtaining a coating structure.
(5) The coating structure is irradiated with ultraviolet rays at a light dose of 1500 mJ/cm², thereby obtaining a composite electrolyte.

### Example 2. Composite electrolyte

A dispersion is prepared by dispersing 10 g of a mixture as inorganic particles (first inorganic particles : second inorganic particles = 9:1 weight ratio) in 59.25 g of an electrolyte solution, the content of the crosslinking agent is adjusted to 25 g, and the content of the initiator is adjusted to 0.75 g. The coating structure is irradiated with ultraviolet rays at a light dose of 1000 mJ/cm². Except for these, the same process as in Example 1 is repeated.

### Example 3. Composite electrolyte

As the electrolyte solution, a solution in which a non-aqueous organic solvent obtained by mixing ethylene carbonate (EC) and diethyl carbonate (DEC) at a volume ratio of 3:7, 1M LiTFSI, and 2 wt% vinylene carbonate (VC) are dissolved is used. Except for these, the same process as in Example 1 is repeated.

### Example 4. Composite electrolyte

As the electrolyte solution, a solution in which a non-aqueous organic solvent obtained by mixing ethylene carbonate (EC) and dimethyl carbonate (DMC) at a volume ratio of 3:7, 1M LiTFSI, and 2 wt% vinylene carbonate (VC) are dissolved is used. Except for these, the same process as in Example 1 is repeated.

### Example 5. Composite electrolyte

As the electrolyte solution, a solution in which a non-aqueous organic solvent obtained by mixing ethylene carbonate (EC) and ethyl methyl carbonate (EMC) at a volume ratio of 1:9, 1M LiTFSI, and 2 wt% vinylene carbonate (VC) are dissolved is used. Except for these, the same process as in Example 1 is repeated.

### Example 6. Composite electrolyte

As the electrolyte solution, a solution in which a non-aqueous organic solvent obtained by mixing ethylene carbonate (EC) and ethyl methyl carbonate (EMC) at a volume ratio of 4:6, 1M LiTFSI, and 2 wt% vinylene carbonate (VC) are dissolved is used. Except for these, the same process as in Example 1 is repeated.

### Comparative Example 1. Composite electrolyte

A dispersion is prepared by dispersing 10 g of a mixture as inorganic particles (first inorganic particles:second inorganic particles = 9:1 weight ratio) in 59.25 g of an electrolyte solution. The content of the initiator is adjusted to 0.75 g. The coating structure is irradiated with ultraviolet rays at a light dose of 500 mJ/cm². Except for these, the same process as in Example 1 is repeated.

### Comparative Example 2. Composite electrolyte

A dispersion is prepared by dispersing 10 g of a mixture as inorganic particles (first inorganic particles:second inorganic particles = 9:1 weight ratio) in 79.85 g of an electrolyte solution. The content of the crosslinking agent is adjusted to 5 g, and the content of the initiator is adjusted to 0.15 g. Except for these, the same process as in Example 1 is repeated.

### Comparative Example 3. Composite electrolyte

A dispersion is prepared by dispersing 10 g of a mixture as inorganic particles (first inorganic particles:second inorganic particles = 9:1 weight ratio) in 54.10 g of an electrolyte solution. The content of the crosslinking agent is adjusted to 30 g, and the content of the initiator is adjusted to 0.9 g. The coating structure is irradiated with ultraviolet rays at a light dose of 1000 mJ/cm². Except for these, the same process as in Example 1 is repeated.

### Comparative Example 4. Composite electrolyte

A dispersion is prepared by dispersing 10 g of a mixture as inorganic particles (first inorganic particles:second inorganic particles = 9:1 weight ratio) in 73.50 g of an electrolyte solution. The content of the initiator is adjusted to 1.5 g. Except for these, the same process as in Example 1 is repeated.

### [Evaluation Method]

### 1. Ionic conductivity of composite electrolyte

(1) A coin cell having a diameter of 20 mm and a thickness of 16 mm, in which the composite electrolyte of each of the Examples and Comparative Examples is disposed between two SUS plates, is prepared.
(2) Ionic conductivity of the coin cell is calculated by performing electrical resistance measurement using electrochemical impedance spectroscopy (EIS) and conversion through a Nyquist plot method. The electrical resistance measurement is performed under an AC voltage at an amplitude of 10 mV and a frequency of 1,000,000 to 1,000 Hz.

### 2. Life characteristics of composite electrolyte

Life characteristics of a battery to which the composite electrolyte according to each of the Examples and Comparative Examples is applied are measured according to the following process.
(1) A positive electrode slurry is prepared by mixing a positive electrode active material, a conductive agent, and a binder in a solvent at a weight ratio of 97.5:1.1:1.4 (positive electrode active material : conductive agent : binder). Here, the positive electrode active material is LiNi_{0.86}Co_{0.05}Mn_{0.12}Al_{0.02}O₂ (manufactured by LG Chem). The conductive agent is Super P. The binder is PVdF (Polyvinylidene fluoride). The solvent is NMP (N-Methyl-2-pyrrolidone).
(2) The positive electrode slurry is applied onto an aluminum current collector having a thickness of 20 µm at a loading amount of 4.0 mAh/cm².
(3) The applied positive electrode slurry is dried and rolled to manufacture a positive electrode. The positive electrode is cut to a size of 1.54 cm² (14 pi).
(4) Lithium metal is rolled onto a copper current collector having a thickness of 10 µm to manufacture a negative electrode having a total thickness of 30 µm. The negative electrode is cut to a size of 1.76 cm² (15 pi).
(5) The composite electrolyte according to each of the Examples and Comparative Examples is cut to a size of 2.83 cm² (19 pi).
(6) The composite electrolyte is disposed between the positive electrode and the negative electrode to manufacture a 2032-type coin cell.
(7) Life characteristics of the coin cell are evaluated by comparing a capacity retention rate after 100 cycles at 1 C Cycle of the coin cell using an SC (Small Cell Cycler, SC 05-0.1, Wonik PNE).

### 3. Storage modulus (G') of composite electrolyte

A storage modulus of a battery to which the composite electrolyte according to each of the Examples and Comparative Examples is applied is measured according to the following process.
(1) 2 ml of the slurry according to each of the Examples and Comparative Examples is applied onto an aluminum current collector having a thickness of 20 µm.
(2) The applied slurry is irradiated with ultraviolet rays having a light dose corresponding to each of the Examples and Comparative Examples to manufacture a bulk composite electrolyte.
(3) The bulk composite electrolyte is placed in a rheometer (Texas Instruments, HR-10), and a storage modulus is measured under conditions set at 25°C and an angular frequency of 0.1 rad/s to 100 rad/s.

### 4. Electrode interfacial resistance of composite electrolyte

Electrode interfacial resistance of the composite electrolyte according to each of the Examples and Comparative Examples is measured according to the following process.
(1) A positive electrode slurry is prepared by mixing a positive electrode active material, a conductive agent, and a binder at a weight ratio of 97.5:1.1:1.4 (positive electrode active material : conductive agent : binder). Here, the positive electrode active material is LiNi_{0.86}Co_{0.05}Mn_{0.12}Al_{0.02}O₂ (manufactured by LG Chem). The conductive agent is Super P. The binder is PVdF. The solvent is NMP.
(2) The positive electrode slurry is applied onto an aluminum current collector having a thickness of 20 µm at a loading amount of 4.0 mAh/cm².
(3) The applied positive electrode slurry is dried and rolled to manufacture a positive electrode. The positive electrode is cut to a size of 1.54 cm² (14 pi).
(4) Lithium metal is rolled onto a copper current collector having a thickness of 10 µm to manufacture a negative electrode having a total thickness of 100 µm. The negative electrode is cut to a size of 17.6 cm² (15 pi).
(5) The composite electrolyte according to each of the Examples and Comparative Examples is cut to a size of 2.83 cm² (19 pi).
(6) The composite electrolyte is disposed between the positive electrode and the negative electrode to manufacture a 2032-type coin cell.
(7) The electrode interfacial resistance of the coin cell is calculated by performing electrical resistance measurement using electrochemical impedance spectroscopy (EIS) and conversion through a Nyquist plot method. The electrode interfacial resistance measurement is performed by measuring electrical resistance under conditions of an amplitude of 10 mV and a frequency of 1,000,000 to 0.1 Hz.

### [Evaluation Results and Discussion]

The manufacturing method of the Preparation Examples and evaluation results of the composite electrolytes of the Examples and Comparative Examples are shown in Table 1 below.

**[Table 1]**

| Classification | Units | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| Crosslinking agent content | wt% | 10 | 25 | 10 | 10 | 10 | 10 | 25 | 5 | 30 | 10 |
| UV light dose | mJ/cm² | 1500 | 1000 | 1500 | 1500 | 1500 | 1500 | 500 | 1500 | 1000 | 1500 |
| Initiator/crosslinking agent ratio | % | 3 | 3 | 3 | 3 | 3 | 3 | 3 | 3 | 3 | 15 |
| Composite electrolyte thickness | µm | 50 | 50 | 50 | 50 | 50 | 50 | 50 | 50 | 50 | 50 |
| Storage modulus | Pa | 5687 | 6934 | 4528 | 5966 | 4028 | 5749 | 2121 | 1747 | - | 3342 |
| Average ionic conductivity | mS/cm | 3.25 | 1.02 | 3.43 | 3.06 | 3.45 | 3.14 | 1.42 | 3.50 | 0.76 | 3.01 |
| Deviation in ionic conductivity | mS/cm | 0.05 | 0.05 | 0.05 | 0.05 | 0.07 | 0.05 | 0.32 | 0.40 | 0.08 | 0.06 |
| Electrode interfacial resistance | Ω | 199 | 209 | 185 | 205 | 183 | 202 | 292 | 180 | 331 | 255 |
| Life characteristics | %(100^{th} Cycle/1^{st} cycle retention) | 95 | 93 | 93 | 92 | 90 | 91 | 75 | 85 | 82 | 70 |

Meanwhile, referring to Table 1, compared with Examples 1 to 6, in Comparative Example 3, a large amount of the crosslinking agent was included in the slurry. As a result, a crosslinking reaction proceeded excessively, so that the slurry was formed similarly to a solid phase, and the storage modulus could not be measured.

## Claims

1. A manufacturing method of a composite electrolyte, the method comprising:
preparing a slurry comprising inorganic particles, a polymer component, a crosslinking agent, an initiator, and an electrolyte solution;
obtaining a coating structure by applying the slurry to one surface or both surfaces of a substrate layer; and
obtaining a composite electrolyte by irradiating the coating structure with ultraviolet rays at a light dose of 800 mJ/cm² or more,
wherein a content of the crosslinking agent in the slurry is within a range of 10 wt% to 25 wt%, and a content of the initiator in the slurry is within a range of 1 part by weight to 10 parts by weight based on 100 parts by weight of the crosslinking agent,
wherein the electrolyte solution comprises a non-aqueous solvent and a lithium salt, and
wherein a content of linear carbonate in the non-aqueous solvent is higher than a content of ethylene carbonate.

2. The method of claim 1, wherein
a total content of the inorganic particles and the polymer component in the slurry is within a range of 250 parts by weight to 350 parts by weight based on 100 parts by weight of the crosslinking agent.

3. The method of claim 1, wherein
the crosslinking agent comprises a monomeric crosslinking agent and a polymeric crosslinking agent.

4. The method of claim 1, wherein
wherein the crosslinking agent comprises one or more selected from the group consisting of triethylene glycol diacrylate (TEGDA), triethylene glycol dimethacrylate (TEGDMA), polyethylene glycol diacrylate (PEGDA), polyethylene glycol dimethacrylate (PEGDMA), polyurethane diacrylate (PUDA), polyurethane dimethacrylate (PUDMA), trimethylolpropane triacrylate (TMPTA), trimethylolpropane trimethacrylate (TMPTMA), 1,6-hexanediol diacrylate (HDDA), and 1,6-hexanediol dimethacrylate (HDDMA).

5. The method of claim 1, wherein
the initiator comprises one or more selected from the group consisting of a short-wavelength photopolymerization initiator and a long-wavelength photopolymerization initiator.

6. The method of claim 5, wherein
the initiator comprises one or more selected from the group consisting of IRGACURE 127 (2-Hydroxy-1-{4-[4-(2-hydroxy-2-methyl-propionyl)-benzyl]-phenyl}-2-methyl-propan-1-one), DMPA (2,2-dimethoxy-2-phenylacetonephenone), HOMPP (2-hydroxy-2-methylpropipphenone), and LAP (Lithium phenyl-2,4,6-trimethylbenzoylphosphinate), or one or more selected from the group consisting of Bis(2,4,6-trimethylbenzoyl)-phenylphosphineoxide and Ethyl (2, 4, 6-trimethylbenzoyl) pheny1phosphinate.

7. The method of claim 1, wherein
a thickness of the substrate layer is within a range of 5 µm to 20 µm.

8. The method of claim 1, wherein
the obtaining the coating structure comprises,
applying the slurry onto the substrate layer to a thickness of 30 µm to 45 µm.

9. The method of claim 1, wherein
the substrate layer is a porous substrate layer comprising a polyolefin-based polymer.

10. The method of claim 1, wherein
a content of the inorganic particles in the slurry is equal to or greater than a content of the polymer component.

11. The method of claim 1, wherein
the inorganic particles comprise one or more selected from the group consisting of a lithium-containing metal oxide and a lithium-free metal oxide.

12. The method of claim 11, wherein
the lithium-containing metal oxide comprises one or more selected from the group consisting of a lithium aluminum germanium phosphate (LAGP)-based compound, a lithium lanthanum zirconium oxide (LLZO)-based compound, a lithium aluminum titanium phosphate (LATP)-based compound, a lithium lanthanum zirconium tantalum oxide (LLZTO)-based compound, a lithium silicon titanium phosphate (LSTP)-based compound, and a lithium oxide.

13. The method of claim 11, wherein
the lithium-free metal oxide comprises one or more selected from the group consisting of zinc oxide (ZnO), calcium carbonate (CaCO₃), silicon dioxide (SiO₂), boehmite (AlO(OH)), alumina (Al₂O₃), barium titanate (BaTiO₃), and titanium dioxide (TiO₂).

14. The method of claim 1, wherein
the polymer component comprises one or more selected from the group consisting of polyvinylidene fluoride, poly(vinylidene fluoride-co-trichloroethylene), poly(vinylidene fluoride-co-chlorotrifluoroethylene), poly(vinylidene fluoride-co-trifluoroethylene), poly(vinylidene fluoride-co-tetrafluoroethylene), poly(vinylidene fluoride-co-hexafluoropropylene), spandex, butyl acrylate, polymethyl methacrylate, polyacrylonitrile, polyvinylpyrrolidone, and polyvinyl acetate.

15. The method of claim 1, wherein
the electrolyte solution further comprises an electrolyte solution additive.

16. The method of claim 1, wherein
the non-aqueous solvent comprises one or more selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), and gamma-butyrolactone (γ-butyrolactone).

17. The method of claim 1, wherein
the lithium salt comprises one or more selected from the group consisting of LiTFSi, LiFSi, LiPF₆, LiBF₄, LiCl, LiBr, LiI, LiClO₄, LiAsF₆, LiCH₃CO₂, LiCF₃SO₃, LiN(CF₃SO₂)₂, LiN(FSO₂)₂, and LiC(CF₂SO₂)₃.
